# EUROPÄISCHE PATENTSCHRIFT

(11) **EP 3 949 727 B1**
(45) Veröffentlichungstag und Bekanntmachung des Hinweises auf die Patenterteilung: **11.12.2024**
(21) Anmeldenummer: 21189583.4
(22) Anmeldetag: 04.08.2021
(51) Int. Cl.: A01J 25/00, A01J 25/11, A01J 25/12

(54) **VORRICHTUNG ZUR HERSTELLUNG VON KÄSE MIT BRUCHSCHONENDER DOSIEREINRICHTUNG**
DEVICE FOR THE PRODUCTION OF CHEESES WITH SHATTER-PROOF METERING DEVICE
DISPOSITIF DE FABRICATION DE FROMAGE DOTÉ D'UN DISPOSITIF DE DOSAGE SANS RUPTURE

(30) Priorität: 07.08.2020 DE 102020120904
(43) Veröffentlichungstag der Anmeldung: 09.02.2022
(73) Patentinhaber: ALPMA Alpenland Maschinenbau GmbH, 83543 Rott am Inn (DE)
(72) Erfinder: HOHENADLER, Tobias, 83553 Frauenneuharting (DE); FRANZ, Günter, 84544 Aschau am Inn (DE); HOFSTETTER, Thomas, 83550 Emmering (DE); GRABL, Stefan, 83555 Gars/Bahnhof (DE)
(74) Vertreter: Manitz Finsterwald Patent- und Rechtsanwaltspartnerschaft mbB

(56) Entgegenhaltungen:
- WO-A1-2010/041940
- DE-A1- 1 905 600
- DE-A1- 1 919 617

## Beschreibung

Die vorliegende Erfindung betrifft eine Vorrichtung zur Herstellung von Käse aus einem Käsebruch/Molke-Gemisch mit einer Dosiereinrichtung, mittels derer sich das Käsebruch/Molke-Gemisch derart schonend in Käseformen abfüllen lässt, dass aufgrund der Dosierung des Käsebruch/Molke-Gemischs durch die Dosiereinrichtung die innere Struktur bzw. das innere Gefüge des Käsebruchs nicht zerstört wird und es zu keiner inhomogenen Verdichtung des Käsebruch/Molke-Gemischs kommt.

Bei der Herstellung von Käse aus einem Käsebruch/Molke-Gemisch kann einer Käsebereitungsvorrichtung eine Mischung aus festen Bestandteilen - dem Käsebruch - und flüssigen Bestandteilen - der Molke - zugeführt werden, weshalb solche Verfahren auch unter dem Begriff "Abfüllen unter Molke" bekannt sind.

Die Käsebereitungsvorrichtung kann hierzu ein oder mehrere gerade, im Wesentlichen vertikal ausgerichtete Portionier-Rohre mit zumindest einem Einlass umfassen, über den dem jeweiligen Portionier-Rohr Käsebruch und ggf. auch zusätzliche Molke zugeführt wird. Dabei können die Molke und der Käsebruch zunächst sowohl getrennt als auch als Gemisch vorliegen und dem Einlass zugeführt werden. Das Portionier-Rohr dient dazu, den Käsebruch durch Pressung, beispielsweise durch Gewichtskraft, zu einem Rohkäse zu verdichten. Hierbei verhindert bzw. vermeidet die Molke, dass sich Lufteinschlüsse im Käsebruch bilden können, der im Portionier-Rohr eine Käsebruch-Säule ausbildet, wodurch sich ein geschlossener Rohkäse mit einer minimalen Anzahl von Lufteinschlüssen herstellen lässt. Dementsprechend dienen solche Verfahren der Herstellung fester Schnittkäse wie beispielsweise Gouda oder ähnlicher Käsesorten. Je geringer dabei der Molkeanteil des Käsebruch/Molke-Gemischs ist, um so mehr Bruchlöcher bilden sich in dem Käse aus. Dementsprechend ist hier im Kontext unter dem Begriff "Käsebruch/Molke-Gemisch" eine Mischung aus Käsebruch und Molke zu verstehen, wobei der Molkeanteil jedoch auch gegen Null gehen oder Null betragen kann.

Das Verdichten des Käsebruchs kann wie bereits erwähnt entweder ausschließlich durch das Eigengewicht der Käsebruch-Säule im Portionier-Rohr erfolgen oder durch zusätzliche Maßnahmen unterstützt werden, die zu einer Pressung des Käsebruchs im Portionier-Rohr führen. Damit überschüssige Molke aus dem Portionier-Rohr abfließen kann, kann das Portionier-Rohr perforierte Bereiche aufweisen, durch die die Molke aus dem Portionier-Rohr austreten kann.

Um das auf diese Art und Weise verdichtete Käsebruch/Molke-Gemisch am unteren Ende des Portionier-Rohrs dosiert abgeben und in unterhalb des Portionier-Rohrs befindliche Käseformen abfüllen zu können, kann das Portionier-Rohr an seinem unteren Ende zwei in Längsrichtung des Portionier-Rohrs voneinander beabstandete Verschlüsse aufweisen, die eine Portionier-Kammer definieren, deren Volumen einer zur Herstellung einer Käseportion erforderlichen Menge des Käsebruch/Molke-Gemischs entspricht. Durch wechselseitiges Öffnen bzw. Schließen der beiden Verschlüsse kann dabei eine definierte Menge des Käsebruch/Molke-Gemischs aus der Portionier-Kammer in die unterhalb der Portionier-Kammer befindliche Käseformen abgefüllt werden, wie dies der Art nach im Wesentlichen aus der DE 1 905 600 A1 bekannt ist. Eine ähnliche Vorrichtung geht ferner aus der WO 2010/041940 A1 hervor.

Der untere der beiden Verschlüsse des Portionier-Rohrs kann dabei beispielsweise als einfacher Sperrschieber ausgebildet sein, wohingegen der darüber befindliche Verschluss als Messerschieber ausgebildet sein kann. Die Portionierung geht dabei derart vonstatten, dass der zunächst geschlossene Messerschieber geöffnet wird, woraufhin die Käsebruch-Säule in ihrer Gesamtheit in dem Portionier-Rohr absackt, bis sie auf den geschlossenen Sperrschieber trifft. Anschließend wird dann der Messerschieber wieder geschlossen, wodurch von der Käsebruch-Säule eine definierte Menge des verdichteten Käsebruch/Molke-Gemischs abgetrennt wird, die sich dann in der Portionier-Kammer befindet. Wird nun der Sperrschieber geöffnet, kann die Portion des verdichteten und abgetrennten Käsebruch/Molke-Gemischs aus der Portionier-Kammer schwerkraftbedingt in eine unterhalb des Portionier-Rohrs befindliche Käseform fallen.

Aufgrund der Tatsache, dass das Käsebruch/Molke-Gemisch infolge des Öffnens des Messerschiebers in dem Portionier-Rohr absackt und dabei auf den Sperrschieber trifft, kann es jedoch zu einer inhomogenen Verdichtung des Käsebruch/Molke-Gemischs und/oder zu einer Zerstörung der inneren Struktur bzw. des Gefüges des verdichteten Käsebruch/Molke-Gemischs kommen. Eine entsprechende Problematik kann zu Tage treten, wenn die abgetrennte Portion des verdichteten Käsebruch/Molke-Gemischs infolge des Öffnens des Sperrschiebers aus der Portionier-Kammer in die Käseform fällt.

Der Erfindung liegt daher die Aufgabe zugrunde, zumindest eine Realisierung anzugeben, mit der sich das Käsebruch/Molke-Gemisch bruchschonender dosieren, insbesondere portionieren und/oder abfüllen, lässt.

Gemäß der vorliegenden Erfindung wird diese Aufgabe mit einer Vorrichtung zur Herstellung von Käse aus einem Käsebruch/Molke-Gemisch mit den Merkmalen des Anspruchs 1 gelöst.

Dadurch, dass die Dosiereinrichtung zumindest drei in Längsrichtung des Portionier-Rohrs voneinander beabstandete Schieber umfasst, kann die Portionier-Kammer in zumindest zwei Kammerabschnitte - einen oberen Kammerabschnitt und einen unteren Kammerabschnitt - unterteilt werden, wodurch sich die Fallhöhe des Käsebruch/Molke-Gemischs im Rahmen der Dosierung reduzieren lässt.

Umfasst die Dosiereinrichtung beispielsweise drei in Längsrichtung des Portionier-Rohrs voneinander beabstandete Schieber, die zunächst alle geschlossen sind, und wird dann zunächst nur der oberste Schieber, bei dem es sich um einen Messerschieber handeln kann, geöffnet, so sackt die Käsebruch-Säule zunächst nur bis auf den mittleren Schieber ab, der nachfolgend auch als Trennschieber bezeichnet wird. Wird anschließend der Trennschieber geöffnet, so sackt die Käsebruch-Säule ein zweites Mal ab, wobei sie auf den geschlossenen untersten Schieber trifft, der nachfolgend auch als Sperrschieber bezeichnet wird.

Die Käsebruch-Säule sackt somit nicht in einem Rutsch von dem Messerschieber auf den Sperrschieber ab; vielmehr wird die Fallhöhe zwischen dem Messerschieber und dem Sperrschieber durch den Trennschieber in zwei Fallabschnitte unterteilt, wodurch die Fallhöhe der Käsebruch-Säule reduziert wird und damit einer ungleichmäßigen bzw. inhomogenen Verdichtung des Käsebruch/Molke-Gemischs begegnet werden kann.

Selbstverständlich kann die Dosiereinrichtung auch mehr als einen Trennschieber umfassen, die sich sukzessive nacheinander öffnen lassen, um so die Käsebruch-Säule Stück für Stück bis auf den Sperrschieber in dem Portionier-Rohr abrutschen zu lassen.

Die Position des in Abgaberichtung stromabwärts gelegenen Schiebers kann in Längsrichtung des Portionier-Rohrs verändert werden, wodurch der Abstand des in Abgaberichtung stromabwärts gelegenen Schiebers bzw. des Sperrschiebers zu der darunter befindlichen Käseform verändert und insbesondere reduziert werden kann, wenn der Sperrschieber nach unten verfahren wird. Wird daher der Sperrschieber geöffnet, nachdem derselbe nach erfolgter Befüllung der Portionier-Kammer mit Käsebruch/Molke-Gemisch gefüllt wurde, fällt somit die portionierte Menge des Käsebruchs weniger tief nach unten, bevor sie von der Käseform aufgenommen wird. Mit anderen Worten kann also die Fallhöhe zwischen dem Sperrschieber und der Käseform reduziert werden, was in der gewünschten Weise zu einer geringeren Verdichtung und somit zu einer schonenderen Abgabe des Käsebruch/Molke-Gemischs führt, wenn dieses in die Käseform fällt.

Darüber hinaus kann durch die Positionsveränderlichkeit des Sperrschiebers auch die Fallhöhe zwischen dem Messerschieber und dem Sperrschieber reduziert werden, so dass die Käsebruch-Säule nach erfolgtem Öffnen des Messerschiebers weniger tief nach unten fällt. Wird dabei der Messerschieber erst dann wieder geschlossen, nachdem der Sperrschieber nach unten in Richtung der Käseform verschoben wurde, kann dieselbe Menge an Käsebruch/Molke-Gemisch von der Käsebruch-Säule abgetrennt werden, wie im Falle eines ortsfesten Sperrschiebers.

Im Folgenden wird nun auf bevorzugte Ausführungsformen der erfindungsgemäßen Vorrichtung eingegangen, wobei sich weitere Ausführungsformen auch aus den abhängigen Ansprüchen, der Figurenbeschreibung sowie den Zeichnungen selbst ergeben können.

So kann es gemäß einer Ausführungsform vorgesehen sein, dass sich auch bei der Ausführungsform der erfindungsgemäßen Vorrichtung, bei der die Dosiereinrichtung zumindest drei in Längsrichtung des Portionier-Rohrs voneinander beabstandete Schieber umfasst, die Position des in Abgaberichtung am weitesten stromabwärts gelegenen Schiebers, der hier auch als "positionsveränderlicher Schieber" bezeichnet wird, in Längsrichtung des Portionier-Rohrs zur Veränderung des Volumens der Portionier-Kammer einstellen bzw. verändern lässt.

Somit kann zur Reduzierung der Fallhöhe nicht nur die Portionier-Kammer in mehrere Kammerabschnitte innerhalb der Portionier-Kammer unterteilt werden; vielmehr lässt sich zusätzlich auch die Fallhöhe zwischen dem Sperrschieber und der darunter befindlichen Käseform reduzieren, wodurch sich der gesamte Dosiervorgang besonders bruchschonend ausführen lässt.

Um die Position des am weitesten stromabwärts gelegenen Schiebers in Längsrichtung des Portionier-Rohrs verändern zu können, kann es gemäß einer weiteren Ausführungsform vorgesehen sein, dass das Portionier-Rohr im Bereich der Dosiereinrichtung zur Veränderung des Volumens der Portionier-Kammer teleskopierbar ausgebildet ist. Hierzu wäre es beispielsweise denkbar, das Portionier-Rohr im Bereich der Dosiereinrichtung aus einem elastischen Werkstoff auszubilden, der es erlaubt, den unteren Endabschnitt des Portionier-Rohrs in Längsrichtung zu dehnen.

Gemäß einer weiteren Ausführungsform kann es vorgesehen sein, dass die Dosiereinrichtung zur Veränderung des Volumens der Portionier-Kammer einen in Längsrichtung des Portionier-Rohrs verschieblichen Rohrabschnitt aufweist, wobei dieser verschiebliche Rohrabschnitt und das untere Ende des Portionier-Rohrs ineinander geschoben sind. Beispielsweise kann der verschiebliche Rohrabschnitt das untere Ende des Portionier-Rohrs aufnehmen oder der verschiebliche Rohrabschnitt kann von dem unteren Ende des Portionier-Rohrs aufgenommen werden.

Bei solch einer teleskopierbaren Ausgestaltung der Dosiereinrichtung ist der am weitesten stromabwärts gelegene Schieber an dem verschieblichen Rohrabschnitt vorgesehen und zusammen mit diesem in Längsrichtung des Portionier-Rohrs verschiebbar, wodurch sich in der gewünschten Weise zum einen der Abstand zwischen dem am weitesten stromabwärts gelegenen Schieber und dem am nächsten stromaufwärts gelegenen Schieber, bei dem es sich um einen Messerschieber oder um einen Trennschieber handeln kann, und zum anderen der Abstand zwischen dem am weitesten stromabwärts gelegenen Schieber und einer darunter befindlichen Käseform reduzieren lässt.

Im Folgenden wird nun unter Bezugnahme auf die Figuren eine Ausführungsform der erfindungsgemäßen Vorrichtung zur Herstellung von Käse aus einem Käsebruch/Molke-Gemisch exemplarisch erläutert, in denen:
- Fig. 1: eine schematische Querschnittdarstellung einer erfindungsgemäßen Vorrichtung zur Herstellung von Käse aus einem Käsebruch/Molke-Gemisch im Ausgangszustand zeigt; und
- Fig. 2: die Vorrichtung der Fig. 1 mit austeleskopierter Dosiereinrichtung zeigt.

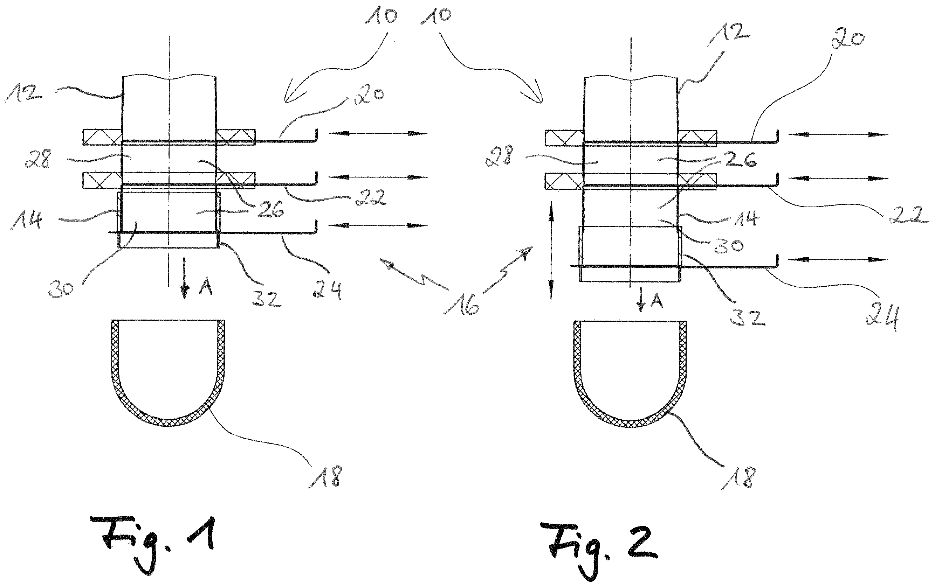

Die Fig. 1 zeigt eine schematische Schnittdarstellung einer Ausführungsform einer erfindungsgemäßen Vorrichtung 10 zur Herstellung von Käse aus einem Käsebruch/Molke-Gemisch. Die Vorrichtung umfasst ein gerades Portionier-Rohr 12, welches zur Aufnahme eines Käsebruch/Molke-Gemischs dient. Das Portionier-Rohr 12 ist im Wesentlichen vertikal ausgerichtet und weist ein oberes Ende (nicht erkennbar) und ein unteres Ende 14 auf. Bei dem Portionier-Rohr 12 handelt es sich um ein längsseits offenes Rohr, welches sich vorzugsweise in Richtung seines unteren Endes 14 geringfügig aufweiten kann und beispielsweise aus Edelstahl oder Kunststoff gefertigt ist. An seinem oberen Ende steht das Portionier-Rohr 12 mit einem hier nicht erkennbaren Zulauf zur Beschickung des Portionier-Rohrs 12 mit dem Käsebruch/Molke-Gemisch in Verbindung.

An seinem unteren Ende 14 ist eine Dosiereinrichtung 16 vorgesehen, mittels derer sich das Käsebruch/Molke-Gemisch bzw. die sich in dem Portionier-Rohr 12 ausbildende Käsebruch-Säule portionieren und dosiert in eine unterhalb des unteren Endes 14 des Portionier-Rohrs 12 befindliche Käseform 18 abfüllen lässt.

Erfindungsgemäß umfasst die Dosiereinrichtung 16 drei in Längsrichtung des Portionier-Rohrs 12 voneinander beabstandete Schieber 20, 22, 24, die im eingeschobenen bzw. geschlossenen Zustand das Portionier-Rohr 12 in zum Querschnitt des Portionier-Rohrs 12 senkrechter Weise vollständig abschließen und im herausgezogenen bzw. geöffneten Zustand des Portionier-Rohrs 12 über den gesamten Querschnitt hinweg freigeben. Bei dieser Ausführungsform ist der oberste bzw. der in Abgaberichtung A am weitesten stromaufwärts gelegene Schieber 20 als Messerschieber ausgebildet, da sich mit diesem von der Käsebruch-Säule definierte Portionen abtrennen lassen. Demgegenüber sind der in Abgaberichtung A am weitesten stromabwärts gelegene Schieber 24 sowie der zwischen den beiden Schiebern 20, 24 gelegene Schieber 22 als Sperrschieber ausgebildet, da diese beiden Schieber 22, 24 lediglich als Verschlusselement des Portionier-Rohrs 12 dienen. Der mittlere Schieber 22 kann hierbei auch als Trennschieber bezeichnet werden, da sich durch diesen die Portionier-Kammer 26, die im eingeschobenen Zustand der beiden Schieber 20, 24 zwischen diesen gebildet wird, in zwei Kammerabschnitte 28, 30 - einen oberen Kammerabschnitt 28 und einen unteren Kammerabschnitt 30 - unterteilten lässt.

Die Position des in Abgaberichtung A am weitesten stromabwärts befindlichen Schiebers 24 bzw. die Position des Sperrschiebers 24 lässt sich in Längsrichtung des Portionier-Rohrs 12 verändern, wie dies insbesondere in der Fig. 2 durch den vertikal ausgerichteten Doppelpfeil kenntlich gemacht ist. Hierzu ist am unteren Ende 14 des Portionier-Rohrs 12 ein in Längsrichtung des Portionier-Rohrs 12 verschieblicher Rohrabschnitt 32 vorgesehen, der den Sperrschieber 24 aufnimmt, so dass dieser zusammen mit dem verschiebbaren Rohrabschnitt 32 in Längsrichtung des Portionier-Rohrs 12 verschoben werden kann.

Bei der hier dargestellten Ausführungsform nimmt der verschiebliche Rohrabschnitt 32 das untere Ende 14 des Portionier-Rohrs 12 auf, wobei es jedoch ebenfalls möglich wäre, dass das untere Ende 14 des Portionier-Rohrs 12 seinerseits den verschieblichen Rohrabschnitt 32 aufnimmt. Die Dosiereinrichtung 16 ist somit zur Veränderung des Volumens der Portionier-Kammer 26 teleskopierbar ausgebildet, wie sich dies zur bruchschonenden Behandlung des Käsebruch/Molke-Gemischs als vorteilhaft erweist, wie dies anhand der nachfolgenden Beschreibung des Betriebs der erfindungsgemäßen Vorrichtung 10 erläutert wird.

So sind im Ausgangszustand gemäß Fig. 1 zunächst alle drei Schieber 20, 22, 24 geschlossen und der verschiebliche Rohrabschnitt 32 ist so weit nach oben geschoben, dass der Sperrschieber 24 mit dem unteren Ende 14 des Portionier-Rohrs 12 in Anlage steht. Die Portionier-Kammer 26 wird somit durch die drei Schieber 20, 22, 24 und insbesondere durch den Trennschieber 22 in einen oberen Kammerabschnitt 28 und einen unteren Kammerabschnitt 30 unterteilt.

Um nun die Portionier-Kammer 26 sukzessive mit Käsebruch/Molke-Gemisch befüllen zu können, wird zunächst der Messerschieber 20 geöffnet, was zur Folge hat, dass die darüber anstehende Käsebruch-Säule nach unten rutscht, und zwar so weit, bis sie auf den geschlossenen Trennschieber 22 trifft.

Anschließend wird dann der Trennschieber 22 geöffnet, was zur Folge hat, dass die Käsebruch-Säule weiter nach unten rutscht, und zwar so weit, bis sie auf den Sperrschieber 24 trifft. Die Käsebruch-Säule sackt somit nicht in einem Rutsch von dem Messerschieber 20 auf den Sperrschieber 24, wodurch sich in der gewünschten Weise eine übermäßige und insbesondere inhomogene Verdichtung des Käsebruch/Molke-Gemischs aufgrund eines Aufpralls auf den Sperrschieber 24 verhindern lässt.

Nachdem die Käsebruch-Säule in der zuvor beschriebenen Art und Weise Stück für Stück bis auf den Sperrschieber 24 nach unten gerutscht ist, kann dann der Messerschieber 20 wieder geschlossen werden, was zur Folge hat, dass von der Käsebruch-Säule eine definierte Portion abgetrennt wird.

Würde nun der Sperrschieber 24 unmittelbar geöffnet werden, so hätte dies zur Folge, dass die abgetrennte Käsebruchportion aus der Portionier-Kammer 26 unter Überwindung einer verhältnismäßig großen Fallhöhe in die Käseform 18 fällt, was in unerwünschter Weise eine verhältnismäßig starke und inhomogene Verdichtung des Käsebruchs zur Folge hätte.

Bevor daher der Sperrschieber 24 geöffnet wird, wird zunächst der verschiebliche Rohrabschnitt 32 um etwa die Höhe des unteren Kammerabschnitts 28 gemäß Fig. 2 nach unten verfahren, bevor anschließend der Sperrschieber 24 geöffnet wird. Hierbei rutscht die bereits abgetrennte Käsebruchportion innerhalb des Portionier-Rohrs 12 bzw. innerhalb der Portionier-Kammer 26 nach unten, wodurch sich die Fallhöhe in die Käseform 18 nach dem Öffnen des Sperrschiebers 24 zugunsten der bruchschonenden Behandlung des Käsebruchs reduzieren lässt.

Entgegen der voranstehenden Beschreibung, derzufolge der Messerschieber 20 bereits geschlossen wird, nachdem die Käsebruch-Säule von dem Trennschieber 22 bis auf den Sperrschieber 24 abgerutscht ist und bevor der verschiebliche Rohrabschnitt 32 nach unten austeleskopiert wurde, kann der Messerschieber 20 auch erst nach erfolgtem Austeleskopieren des verschieblichen Rohrabschnitts 32 geschlossen werden. In diesem Falle rutscht die gesamte auf dem Sperrschieber 24 ruhende Käsebruch-Säule innerhalb des Portionier-Rohrs 12 nach unten, wenn der verschiebliche Rohrabschnitt 32 nach unten verschoben wird. Dies hat zur Folge, dass von der Käsebruch-Säule eine größere Menge an Käsebruch/Molke-Gemisch abgetrennt werden kann, wenn der Messerschieber 20 geschlossen wird.

Je nachdem, ob zuerst der verschiebliche Rohrabschnitt 32 nach unten verfahren und anschließend der Messerschieber 20 geschlossen wird oder umgekehrt, lassen sich somit unterschiedlich große Mengen an Käsebruch von der Käsebruch-Säule abtrennen und dosieren.

Der Vollständigkeit halber sei an dieser Stelle angemerkt, dass bei der hier dargestellten Ausführungsform die Käseform zur Herstellung kugeliger Käselaibe eine konkave Gestalt aufweist, in die zur Herstellung eines kugeligen Käselaibs ein dazu passender konkaver Deckel eingesetzt werden kann. Selbstverständlich können jedoch zur Herstellung anders geformter Käselaibe auch anders geformte Käseformen zum Einsatz kommen.

### Bezugszeichenliste

- 10: Vorrichtung zur Herstellung von Käse
- 12: Portionier-Rohr
- 14: unteres Ende
- 16: Dosiereinrichtung
- 18: Käseform
- 20: Schieber / Messerschieber
- 22: Schieber / Trennschieber
- 24: Schieber / Sperrschieber
- 26: Portionier-Kammer
- 28: oberer Kammerabschnitt
- 30: unterer Kammerabschnitt
- 32: verschieblicher Rohrabschnitt

- A: Abgaberichtung

## Patentansprüche

1. Vorrichtung (10) zur Herstellung von Käse aus einem Käsebruch/Molke-Gemisch, mit zumindest einem Portionier-Rohr (12), das insbesondere vertikal ausgerichtet ist, zur Aufnahme des Käsebruch/Molke-Gemischs, wobei an einem Ende (14) des Portionier-Rohrs (12), insbesondere am unteren Ende (14) des Portionier-Rohrs (12), eine Dosiereinrichtung (16) zur portionsweisen Abgabe des Käsebruch/Molke-Gemischs vorgesehen ist, wobei die Dosiereinrichtung (16) zumindest drei in Längsrichtung des Portionier-Rohrs (12) voneinander beabstandete Schieber (20, 22, 24) umfasst, wobei die zumindest drei Schieber (20, 22, 24) unabhängig voneinander betätigbar sind, wobei jene zwei Schieber (20, 24), die den größten Abstand zueinander aufweisen, eine Portionier-Kammer (26) mit einem Volumen definieren, das einer zur Abgabe einer Käseportion erforderlichen Menge des Käsebruch/Molke-Gemischs entspricht;
**dadurch gekennzeichnet , dass**
die zumindest drei Schieber (20, 22, 24) im eingeschobenen Zustand das Portionier-Rohr (12) in zum Querschnitt des Portionier-Rohrs (12) senkrechter Weise vollständig verschließen und im herausgezogenen Zustand das Portionier-Rohr (12) über seinen gesamten Querschnitt hinweg freigeben.

2. Vorrichtung nach Anspruch 1,
wobei die Position des in Abgaberichtung am weitesten stromabwärts gelegenen Schiebers (24) in Längsrichtung des Portionier-Rohrs (12) zur Veränderung des Volumens der Portionier-Kammer (26) einstellbar ist.

3. Vorrichtung nach Anspruch 2,
wobei die Dosiereinrichtung (16) zur Veränderung des Volumens der Portionier-Kammer (26) teleskopierbar ausgebildet ist.

4. Vorrichtung nach zumindest einem der Ansprüche 2 und 3,
wobei die Dosiereinrichtung (16) zur Veränderung des Volumens der Portionier-Kammer (26) einen in Längsrichtung des Portionier-Rohrs (12) verschieblichen Rohrabschnitt aufweist, wobei der verschiebliche Rohrabschnitt und das untere Ende (14) des Portionier-Rohrs (12) ineinander geschoben sind, wobei der in Abgaberichtung am weitesten stromabwärts gelegene Schieber (24) an dem verschieblichen Rohrabschnitt vorgesehen ist und zusammen mit diesem in Längsrichtung des Portionier-Rohrs (12) verschiebbar ist.

## Claims

1. An apparatus (10) for producing cheese from a curd/whey mixture, said apparatus (10) comprising at least one portioning tube (12), which is in particular vertically oriented, for receiving the curd/whey mixture, wherein a metering device (16) for the portion-wise dispensing of the curd/whey mixture is provided at one end (14) of the portioning tube (12), in particular at the lower end (14) of the portioning tube (12), wherein the metering device (16) comprises at least three slide valves (20, 22, 24) spaced apart from one another in the longitudinal direction of the portioning tube (12), wherein the at least three slide valves (20, 22, 24) can be actuated independently of one another, wherein those two slide valves (20, 24) which have the greatest spacing from one another define a portioning chamber (26) having a volume which corresponds to a quantity of the curd/whey mixture that is required for dispensing a cheese portion,
**characterized in that**
the at least three slide valves (20, 22, 24) completely close the portioning tube (12) in a manner perpendicular to the cross-section of the portioning tube (12) in the pushed-in state and release the portioning tube (12) over its entire cross-section in the pulled-out state.

2. An apparatus according to claim 1,
wherein the position of the slide valve (24) disposed the furthest downstream in the dispensing direction can be set in the longitudinal direction of the portioning tube (12) to change the volume of the portioning chamber (26).

3. An apparatus according to claim 2,
wherein the metering device (16) is configured as telescopic to change the volume of the portioning chamber (26).

4. An apparatus according to at least one of the claims 2 and 3,
wherein the metering device (16) has, in order to change the volume of the portioning chamber (26), a tube section displaceable in the longitudinal direction of the portioning tube (12), wherein the displaceable tube section and the lower end (14) of the portioning tube (12) are pushed into one another, wherein the slide valve (24) disposed the furthest downstream in the dispensing direction is provided at the displaceable tube section and is displaceable together therewith in the longitudinal direction of the portioning tube (12).

## Revendications

1. Dispositif (10) pour la production de fromage à partir d'un mélange caillé/petit-lait, comprenant au moins un tube de formation de portions (12), en particulier orienté verticalement, destiné à recevoir le mélange caillé/petit-lait,
dans lequel
un moyen de dosage (16) destiné à distribuer par portions le mélange caillé/petit-lait est prévu à une extrémité (14) du tube de formation de portions (12), en particulier à l'extrémité inférieure (14) du tube de formation de portions (12),
le moyen de dosage (16) comprend au moins trois tiroirs (20, 22, 24) espacés les uns des autres dans la direction longitudinale du tube de formation de portions (12),
lesdits au moins trois tiroirs (20, 22, 24) peuvent être actionnés indépendamment les uns des autres,
les deux tiroirs (20, 24) qui présentent la plus grande distance entre eux définissent une chambre de formation de portions (26) avec un volume qui correspond à une quantité du mélange caillé/petit-lait nécessaire pour distribuer une portion de fromage ;
**caractérisé en ce que**
à l'état inséré, lesdits au moins trois tiroirs (20, 22, 24) ferment complètement le tube de formation de portions (12) de manière perpendiculaire à la section transversale du tube de formation de portions (12) et, à l'état retiré, libèrent le tube de formation de portions (12) sur toute sa section transversale.

2. Dispositif selon la revendication 1,
dans lequel la position du tiroir (24) situé le plus en aval dans la direction de distribution est réglable dans la direction longitudinale du tube de formation de portions (12) pour modifier le volume de la chambre de formation de portions (26).

3. Dispositif selon la revendication 2,
dans lequel, pour modifier le volume de la chambre de formation de portions (26), le moyen de dosage (16) est conçu de manière télescopique.

4. Dispositif selon l'une au moins des revendications 2 et 3,
dans lequel, pour modifier le volume de la chambre de formation de portions (26), le moyen de dosage (16) présente un tronçon de tube déplaçable dans la direction longitudinale du tube de formation de portions (12),
le tronçon de tube déplaçable et l'extrémité inférieure (14) du tube de formation de portions (12) sont emboîtés l'un dans l'autre,
le tiroir (24) situé le plus en aval dans la direction de distribution est prévu sur le tronçon de tube déplaçable et peut être déplacé avec celui-ci dans la direction longitudinale du tube de formation de portions (12).
